## Europäisches Patentamt

## European Patent Office

## Office européen des brevets

(19)

(11) Publication number : **0 214 355 B1**

(12) **EUROPEAN PATENT SPECIFICATION**

(45) Date of publication of patent specification :
19.10.88

(51) Int. Cl.⁴ : **A 01 K 5/02**

(21) Application number : **85830217.7**

(22) Date of filing : **13.08.85**

(54) A device for the conservation and the time-distribution of food for animals.

(43) Date of publication of application :
**18.03.87 Bulletin 87/12**

(45) Publication of the grant of the patent :
**19.10.88 Bulletin 88/42**

(84) Designated contracting states :
**AT BE CH DE FR GB LI NL SE**

(56) References cited :
**DE-A- 3 328 762
US-A- 2 528 742**

(73) Proprietor : **Zammarano, Alessandro
Via delle Fornaci, 29
I-00165 Roma (IT)**

(72) Inventor : **Zammarano, Alessandro
Via delle Fornaci, 29
I-00165 Roma (IT)**

(74) Representative : **Mascioli, Alessandro, Prof.Dr.
c/o A.N.D.I. Associazione Nazionale degli Inventori
Via Lima, 35
I-00198 Roma (IT)**

Jouve, 18, rue St-Denis, 75001 Paris, France

## Description

The present invention concerns a device for the conservation, in a cold and/or frozen ambient, of food for animals, wherein said device will automatically distribute in several subsequent stages and/or in subsequent days, precooked or previously prepared foods for animals.

The need of feeding small home animals during one's absence from home on week-ends or on other occasions, when particularly cats and dogs must be left alone even for more days, is well known.

US-A-2 528 742 discloses a device which has those features contained in the preamble of Claim 1.

It is the aim of the present invention to realize an easy to operate, and not expensive device for the conservation and/or automatic time-distribution of previously prepared food.

The aim is reached by means of the device according to Claim 1.

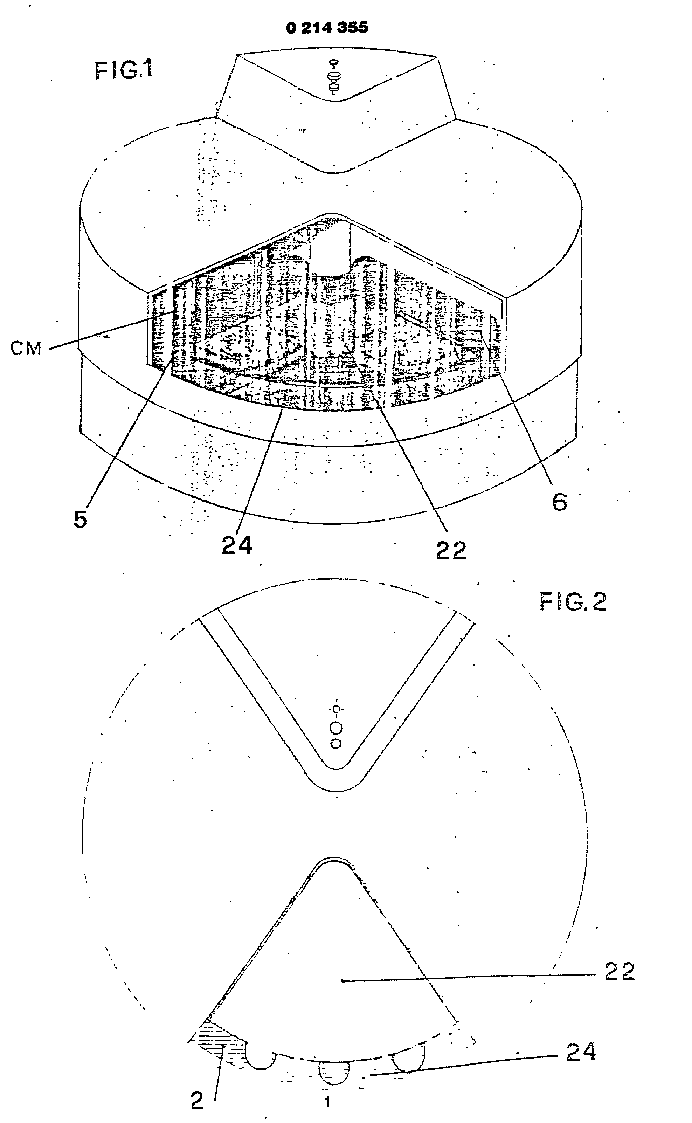

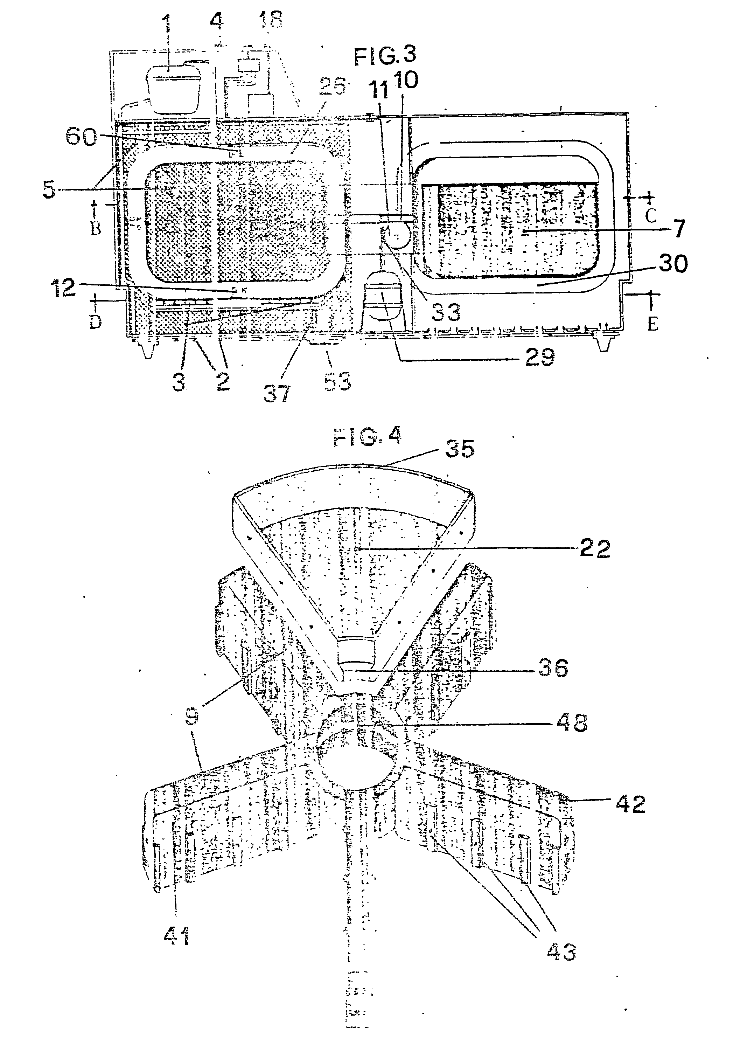

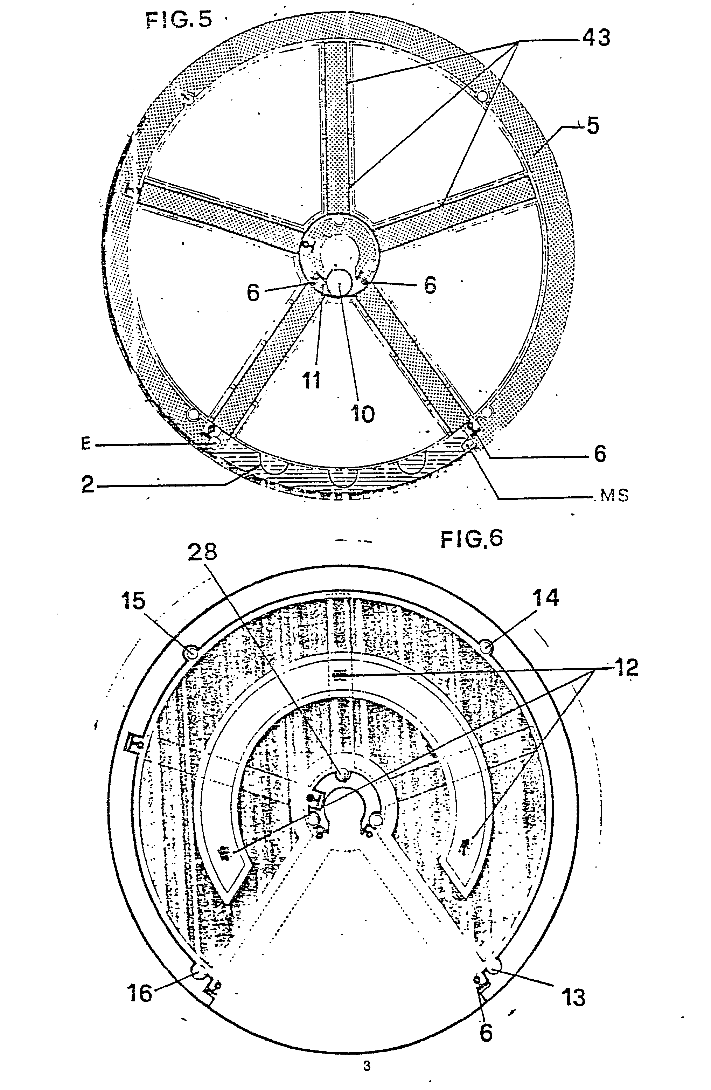

The present invention will be shown hereinbelow in a preferred embodiment in figures 1 to 7 of the attached drawings, which show :

figure 1, an axonometric view of the whole device ;

figure 2, a top view ;

figure 3, a vertical section ;

figure 4, a perspective view of the structure with a plurality of bins ;

figures 5 and 6, sections B-C and D-E of the figure 3 ;

figure 7, the scheme of the electric plant.

The present invention concerns a device for the conservation and the time-distribution of food for animals, comprising a compressor 1 placed above, or in any other disposition with respect to ambient 26 being cooled or frozen, a condenser 2 for the gases placed below said ambient 26 and/or in any other disposition, an evaporator, 3, a thermostat 4 for the continuous temperature regulation.

The walls of the cooled ambient 26 are coated with an insulating material 5.

Ambient 26 shows an opening in the upper cover corresponding to the opening in the bottom and through which the condenser 2 and the gap 24 of insulating edge 5 is visible so as to form two openings placed in the inner side parts being provided with compressable gaskets 6.

The opening has a shape and a dimension equal to the one of a bin of container 7 or fodder trough, and the openings are slightly wider than the length of a radius of the same container, and just a little higher.

The above mentioned fodder trough/container 7 shows the edges of the insulated walls 9 of the supporting structure duly rounded 42, it is open on the upper part 35 and consists in a plurality of bins, which can be extracted, separated by insulated walls 9 which form the supporting structure, preferably of a plastic material, kept in one single body with the supporting structure, by means of fixed joints ties 43.

The above mentioned fodder trough/container 7, once it is placed into the cooled ambient 26 resting, on its bottom, on a plurality of wheels 12 and laterally on the wheels 13, 14, 15, 16, 28, will be put into movement when the programmed timer 18 starts the electric motor 29 with helical end 33, thus causing the mating gears 10, 11 to turn, which put into movement the inside circular toothing 48, thus causing the rotation that will be stopped by the above mentioned timer 18 when the ball axis releases the impulse by entering in the provided housing, in such a way that the cup with the predetermined food shall be placed into position 22, outside of the ambient 26.

The perfect thermal sealing of the above mentioned ambient 26 is provided thanks to the gaskets 6, and to the relevant support 30 ; the above mentioned gaskets, once they have got into contact with the perimeter of the rounded walls of the support with insulated walls 9 of the fodder trough/container 7 and which are separating the bins/cups, form a completely insulated barrier thus keeping the low temperature of the ambient 26 insulated and closed, and leaving outside of the cooling but within the device a bin 22 of the fodder trough/container 7, which, since it has its upper part open, places the food contained therein at the animal's disposal.

In order to prevent that a too cold food may be immediately eaten by the animal, the device is provided (in the zone above the food to be eaten 22) with a programmable mobile cover CM, automatically opening in due time, thus putting the food at the animal's disposal when the temperature is suitable for swallowing, and this with the following procedure :

when the fodder trough/container 7 is moving in order to release another meal, the electromagnet E, being incorporated in the cover CM, is coupled with one of the appropriate slots of the fodder trough/container 7 thus carrying the above mentioned cover with a slow motion, over the new meal ;

the circulation of hot air in summer, or the circulation of the air coming up at a higher temperature when the coil condenser underneath is in operation, and, optionally, also a resistance, passes in direct contact with the food (open zone of the bin 22), with the bottom and all the walls of the same bin 22 (more precisely, it passes through the interspaces between the cup and the insulated walls 9) bringing the food to the temperature which is suitable for eating.

The programmed timer calculates the acclimatization times according to the local temperature, or anyway air temperature, and disconnects the electromagnet E, by returning the small plunger calling back said electromagnet E, with mobile cover CM incorporated and hinged at the centre of the device, to the starting place by means of a previously tensioned spring or elastic band.

In a construction variant concerning the displacement of the coil condenser 2, the same, even if remaining below the device's structure, will be placed and will have a structure such as to have the maximum possible ventilation, as well as in such a position as to favour the maximum heating, making a flow in warm air, of the bin that has come out of the cooled or frozen area containing the food, for instance by distancing the same from the edge of the device and by inclining the same in such a way, that the higher part thereof may get under the bin with the food for the animal, thus favouring the sliding of the warm air towards the top and into said area.

In a further variant, the coil condenser 2, even if partially remaining under the above mentioned device (in the area under the bin that has come out from the cooled or frozen area) will be, in part, vertically placed nearby the rounded side of the device with an approriate protection, thus improving the ventilation thereof.

Furthermore, so as to cause the evaporator with the cooling plate 3 to better lead the cold to the food 7, even remaining under the container with a plurality of bins, it will be preferable to extend the same also sideways, and/or above the said container.

Should the warmth from the condenser for warming up the animal's food not be enough (if the device is placed outside and with a particularly cold weather), and should it be required, a further warming system will be provided, for instance, by means of an electric resistance or other means.

Coil 2 is provided with a container 53 in order to recollect the water coming from ambient 26.

A further feature of the present invention consists in that the fodder trough/container 7 with rounded edges 42 has the openings 35 thereof in its upper part and is formed by a central structure with insulated walls 9 and several bins forming one single body by means of the joints 36 as well as fixed joints ties (male points on the fixed joints ties 43 to be inserted into the female holes of the mobile bins). The bins are extractable, since they are just placed under pressure and joints by means of the ties with male tips 43 placed on the sides of the central body of the fodder trough/container 7, and the holes existing on the corresponding sides of the bins 22 ; as well as for the joint 36 to be placed under the round part of the central body.

The cooled ambient 26 has a small discharge pipe 37 for the water coming from the cooling and/or freezing plate 3 and that will get into the recollecting container 53 placed under the above mentioned ambient 26, said container being incorporated in the cooling grate of coil 2.

The present invention shows moreover a wheel 60 placed within the ambient 26, on the side opposite to the open one where the animal takes the food, above and in contact with the insulated wall 9 that will be placed below the fodder trough/container 7 when the same is stopped in the feedbox position ; said wheel will serve so that when a bin of the container will be inserted into the open area, the pressure performed onto the central body of the above mentioned fodder trough/container 7 will be counteracted by the wheel's 60 resistance which, in turn, by means of its supports, rests and is supported on the ceiling of the ambient 26 ; therefore nothing is moving when the pressure is exerted.

Finally, the wheel 12 is installed within the ambient 26 on the side opposite to the open one where the animal takes the food, under the insulated wall 9 and in contact with the same, that will be placed above when the fodder trough/container 7 is stopped in its feedbox position ; the above mentioned whell will serve in order to obtain that when a bin of the fodder trough/container 7 is extracted, the pressure performed on the central body of same will be counteracted by the resistance of the wheel 12 which in turn, and by means of its supports, rests and is supported, being fixed on the floor of the ambient 26, so that nothing is moved, when the pressure is exerted.

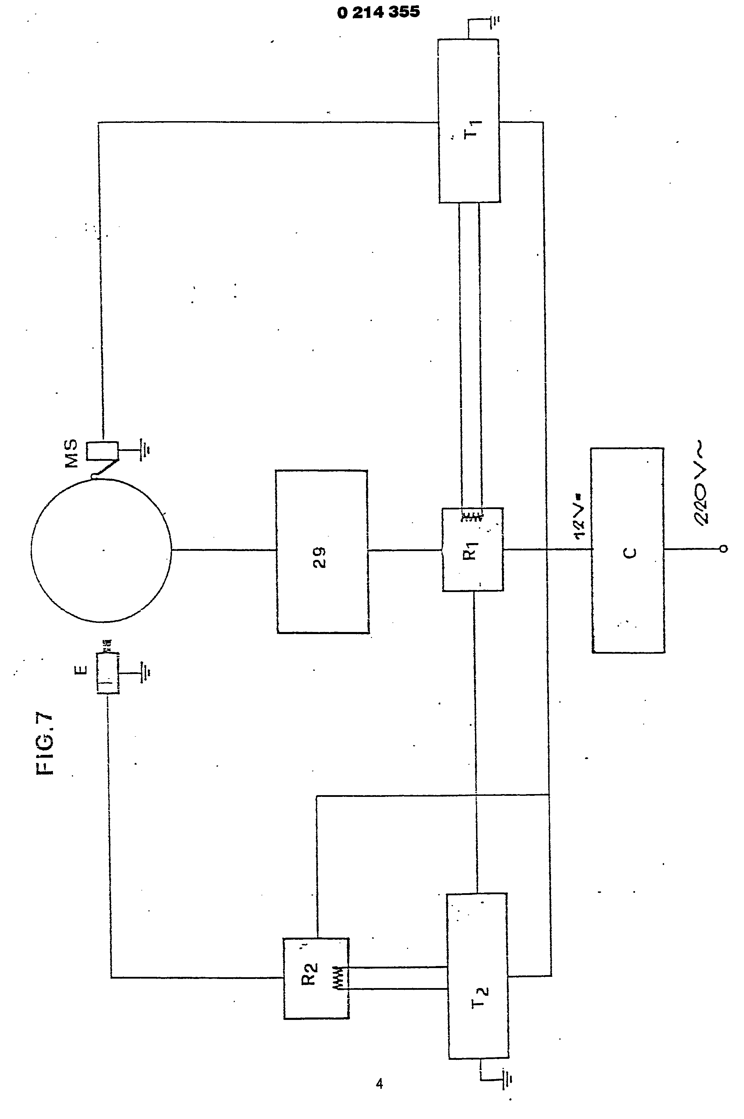

For what concerns the operation of the electric plant according to the figure 7, the buffer circuit C loads the accumulators as well as the commutation circuit, for the 12V feeding of the timers $T_1$ and $T_2$ as well as of the relays $R_1$ and $R_2$.

The timer $T_1$ has a twentyfour hours plus one minute cycle, in other words it provides the relay $R_1$ with voltage, the relay $R_1$ being powered gives a starter pulse to the timer $T_2$ thus powering the relay $R_2$ for a time period variable between one and three hours or more, by means of a command to be given to the timer $T_1$ or $T_2$.

The relay $R_2$ gives voltage to the electromagnet E, and the said electromagnet hooks, during its passage, the fodder trough/container 7 in its predetermined slot thus providing a covering for the time previously determined by the timer $T_2$.

At the same time, the relay $R_1$ feeds the small motor 29 thus causing the fodder trough/container 7 to turn.

Once the partial rotation has been performed, the microswitch MS being operated by a depression on the fodder trough/container 7, will provide a stop pulse to the timer $T_1$ or $T_2$ that releases the relay $R_2$ thus disconnecting the voltage from the small motor 29.

**Claims**

1. A device for the conservation and time-distribution of food for animals comprising a refrigerating unit including a gas compressor (1), a condenser (2), a cooling evaporator (3), a thermostat (4), for a continuous temperature regulation, a cylindrical housing having a generally vertical central axis and having upper and lower covers, the walls of the housing being coated with an insulating material (5) and the upper cover being provided with a feeding opening, a support member rotatably mounted on wheels (12-16) in the above mentioned housing and being rotated by drive means including a timer (18), whereas the above mentioned supporting member carries a plurality of open bins for containing the food thereby forming a fodder trough/container, characterised in that the fodder trough/container includes a plurality of partitions made of thermally insulating material ; in that the device comprises sealing means operable between said housing and the above mentioned supporting member, where the above mentioned sealing means and the above mentioned thermally insulating partitions are operable to insulate also by gaskets the bins from each other and to insulate the above mentioned enclosed and refrigerated area from said exposed area corresponding to the food opening as well as the food to be warmed ; in that the driving means comprise an electric motor (29) to rotate the supporting member, in that the feeding opening is shaped as a sector of a circle and is extended to the periphery of the top cover, in that the lower cover has an opening too, similar in shape to and in a position corresponding to that of the feeding opening, the condenser being placed at least partially under the above mentioned opening in order to warm the food whose position is at the feeding opening, and in that the refrigerating unit may operate also to store some frozen food in the bins, and in that the device further comprises a movable cover, said cover being movable away from the above mentioned feeding opening at a predetermined time interval after a bin has been rotated to the food opening position.

2. Device in accordance with the claim 1, characterized by the fact that by means of the support member with insulated partitions (9) and the relevant gaskets the fodder trough/container is able to cause that within the device a refrigerated zone is created where there are several bins exposed and also a zone suitable for the acclimatization and/or the heating of the food destined to the animal, with size corresponding to one bin, the bins being removable and can be joined by means of joints (43/36) to the above mentioned support member thereby forming together one circular fodder trough/container with several bins.

3. Device in accordance with the claim 1, characterized by the fact that the condenser (2) is provided with a recollection container (53) for the water coming from ambient (26).

4. Device in accordance with the claim 1, characterized by the fact that the circular fodder trough/container (7) is resting on wheels (12) and laterally on the wheels (13, 14, 15, 16, 28) and slowly moves when the timer (18) gives the contact with the electric motor (29), which by means of a helical gear (33) on the shaft thereof turns further gears (10, 11) which, in turn, operate an inside circular toothing (48) of the fodder trough/container (7) thus creating for it that rotary movement that the micro-switch stops in such a way that the fodder trough/container (7) by means of its insulated walls has a bin (22) with the meal previously established outside of the refrigerated and/or frozen ambient (26) even if it remains within the device, and thus at disposal, and keeps the seal thanks to the gaskets (6) and the relevant supports (30) the micro-switch having a cam-following ball which engages with a depression on the support member.

5. Device in accordance with the claim 1, characterized by the fact that the gaskets (6) once they are in contact with the perimeter of the insulated walls (9) of the structure forming the fodder trough/container (7) with several bins, form a complete insulation thus causing that the cold temperature and/or the icy one remain within the ambient (26) insulated and closed, and outside from it but within the device, a cup (22) with the food available for disposal.

6. Device in accordance with the claim 1, characterized by a movable cover CM which is operated by means of a spring and electromagnet, able to consent to bring the refrigerated food to a temperature suitable for being eaten before opening, by making use of the hot air coming from the heat exchange originated by the condenser (2), and, optionally, also by a resistance.

7. Device in accordance with the claim 1, characterized by the fact that the bins (cups) (22) forming the fodder trough/container (7) have the feature to be extractable since they are only pressure inserted and gain fixed, and also by a joint (36) gain to be placed under the round part of the center body.

8. Device in accordance with the claim 1, characterized by the fact that from the inside of the refrigerator comes a small water discharge pipe (37) for the water coming from the evaporator (3) and having as destination the recollection container (53) which is installed under the above mentioned one, and is incorporated in the condenser (2).

9. Device in accordance with the claim 1, characterized by the fact that the electric motor (29) by means of a helical gear (33) on the shaft thereof, turns further gears (10, 11) which in turn cause the rotation of the not protruding tooth rack (48) being within the carrying structure of the fodder trough/container (7) thus creating for the container resting on the wheels, a rotary movement which is required in order to have the bins coming out with prearranged intervals of time, one at each time, from the refrigerated and/or frozen part (26), to the section for heating.

10. A device according to claim 1 characterized in that a first wheel (60) mounted inside the cooled and/or frozen interior part (26) on the side opposite to the feeding opening where the animal takes the food, above and in contact with an insulated wall (9) of the support member situated between two bins (22) when the support member stops with the bin situated at the feeding opening, serves so that when a bin will be inserted into an opening in the support member, the pressure exerted onto the support member will be counteracted by said first wheel (60) mounted at the top of the said interior part, so that nothing moves when the pressure is exerted, and further characterized in that a second wheel (12) is mounted inside the said interior part (26), on the side opposite to the feeding opening, where the animal takes the food, below and in contact with an insulated portion (9) of the support member situated between two bins (22) when the support member stops with a bin situated at the feeding opening, and will serve so that when one bin is extracted, the pressure exerted on the support member will be counteracted by said second wheel (12) mounted at the bottom of the said interior part (26) so that nothing moves when the pressure is exerted.

## Patentansprüche

1. Einrichtung für die Aufbewahrung und für die zeitgemässe Zuteilung von Esswaren für Tiere, bestehend aus einer Kälte-erzeugenden Einheit mit einem Gaskompressor (1), einem Verdichter (2), einem Kühler-Verdampfer (3), einem Thermostat (4), für eine ununterbrochene Temperaturregelung, einem Zylindergehäuse mit einer im Allgemeinen senkrechten Mittellinie und mit Deckeln oben un unten, und mit den Gehäusewänden mit einem Isolierstoff (5) bedeckt, während der Oberdeckel eine Ladeöffnung aufweist, einer tragenden Einheit auf Rädern montiert und dadurch bewegbar (12-16) im obenerwähnte Gehäuse und drehbar durch die Tätigkeit von Antriebmitteln, worunter auch ein Zeitschalter (18) zu finden ist ; während die obenerwähnte.tragende Einheit eine Anzahl von offenen Bechern für das Viehfutter aufweist, womit ein Viehfuttertrog/Behälter entsteht, dadurch gekennzeichnet, dass der Viehfuttertrog/Behälter eine Anzahl von aus thermisch isolierendem Stoff gemachten Trennwänden aufweist ; dass die Einrichtung Trennmittel einschliess, welche zwischen dem obenerwähnten Gehäuse und der obenerwähnten tragenden Einheit betätigt werden können, wo die obenerwähnten Trennmitteln und die obengenannten thermisch isolierenden Trennwände derart betätigt werden können, dass die offenen Becher auch mit Dichtungsstücken voneinander isoliert werden können, und weiter mit dem Zweck, die obenerwähnte geschlossene und gekühlte Zone von der genannten aufgemachten Zone, die der Viehfutteröffnung entspricht, sowie auch von dem zu erwärmenden Viehfutter, zu trennen ; und weiter dadurch gekennzeichnet, dass die Antriebsmitteln einen elektrischen Motor (29) einschliessen, um die tragende Einheit zu drehen ; weiter, dass die Futteröffnung als ein Kressektor geformt ist, und bis zum Umkreis des obigen Deckels sich ausdehnt, weiter dadurch gekennzeichnet, dass auch der untere Deckel eine Öffnung besitzt, wovon die Form und die Stellung denjenigen der Versorgungsöffnung entsprechen, während der Verdichter mindestens zum Teil in der obenerwähnten Öffnung installiert ist, mit dem Zweck, das in der Nähe der Versorgungsöffnung liegende Viehfutter zu erwärmen, und weiter dadurch gekennzeichnet, dass die Abkühleinheit auch dazu funktionieren kann, um etwas gefrorenes Viehfutter in den Bechern zu speichern, und noch dadurch gekennzeichnet, dass das Apparat einen beweglichen Deckel enthält, welcher Deckel aus der obenerwähnten Versorgungsöffnung in einer vorbestimmten Zeitfolge nachdem ein Becher bis in die Viehfutteröffnungsstellung durch Drehung gebracht worden ist, weggenommen werden kann.

2. Einrichtung in Einklang mit dem Anspruch 1, dadurch gekennzeichnet, dass durch die tragende Einheit mit isolierten Trennwänden. (9) und entsprechenden Dichtungen der Viehfuttertrog/Behälter in der Lage ist, zu bestimmen, dass drinnen in der Einrichtung eine Kühlzone geschafft ist, wo verschiedene Becher zu Ausstellung bleiben, und auch eine weitere Zone für die Akklimatisierung und/oder die Heizung des für das Vieh bestimmten Futters, mit Abmessungen entsprechend einem Becher, während die Becher abnehmbar sind und durch Kupplungsstücken (43/36) mit der obenerwähnten tragenden Einheit verbunden werden können, sodass alle zusammen einen Futtertrog/Behälter mit verschiedenen Bechern in runder Form darstellen.

3. Einrichtung in Einklang mit dem Anspruch 1, dadurch gekennzeichnet, dass der Verdichter (2) einen empfängenden Behälter (53) besitzt, womit das aus der Umgebung kommende Wasser (26) gesammelt werden kann.

4. Einrichtung in Einklang mit dem Anspruch 1, dadurch gekennzeichnet, dass der runde Futtertrog/Behälter (7) auf Rädern montiert ist (12) seitlich auf den Rädern (13, 14, 15, 16, 28) und langsam in Bewegung dann gesetzt wird, als der Zeitschalter (18) dem elektrischen Motor (29) Kontakt gibt ; dieser dann, mit einem Spiralgetriebe (35) auf der entsprechender Achse weitere Bewegungen (10, 11) erzeugt, womit ein inneres rundes Getriebe betätigt wird, d. h. vom Viehfuttertrog/Behälter (17) und somit für dasselbe diese rotierende Bewegung erzeugt, welche der Mikro-Schalter in so einer Form festhält, dass der Viehfuttertrog/Behälter (7) mit seinen isolierten Wänden einen Becher (22) mit dem in Voraus darin gesetzten Viehfutter ausser der gefrorenen und/oder erkälteten Umgebung (26) sich befindet, auch wenn es drinnen in der Einrichtung bleibt, d. h. zur Verfügung, und behält die Dichthaltung aufgrund der Dichtungen (6) und entsprechenden Tragstücken (30) ; der Mikroschalter hat eine Kugel, die die Becher folgt, und welche in eine Rille auf der tragenden Einheit sich einlegt.

5. Einrichtung in Einklang mit dem Anspruch 1, dadurch gekennzeichnet, dass die Dichtungen (6), einmal dass sie in Kontakt mit dem Perimeter von den isolierten Wänden von der Struktur kommen, welche den Viehfuttertrog/Behälter (7) mit verschiedenen Bechern formt, eine vollkommene Isolierung erzeugt, womit es geschafft wird, dass die kalte Temperatur, und/oder sogar die gefrorene Temperatur, isoliert und geschlossen in dem Raum (26) bleibt, und ausser dem Raum doch in der Einrichtung, ein Becher (22) mit dem Futter zur Verfügung bleibt.

6. Einrichtung im Einklang mit dem Anspruch 1, dadurch gekennzeichnet, dass ein beweglicher Deckel CM durch eine Feder und ein Elektromagnet betätigt wird, und in der Lage ist, zu gestatten, dass das gekühlte Viehfutter zu eine fürs Essen geeignete Temperatur bevor Aufmachen gebracht wird, d. h. mit Verwendung von warmer Luft, die aus dem Wärmeaustausch des Verdichters (2) herkommt, und weiter, falls sowas erwünscht ist, auch mit Verwendung eines elektrischen Widerstands.

7. Einrichtung in Einklang mit dem Anspruch 1, dadurch gekennzeichnet, dass die Becher (22), die den Viehfuttertrog/Behälter formen, die Eigenschaft haben, ausnehmbar zu sein, weil sie nur mit Druck in Stellung gesetzt und in eine Rille befestigt werden, und auch durch eine Rillebefestigung (36), welche unter dem runden Teil des Zentralkörpers gesetzt werden muss, fest bleiben.

8. Einrichtung in Einklang mit dem Anspruch 1, dadurch gekennzeichnet, dass aus dem inneren Teil des Kühlschranks ein kleines Abwasserrohr (37) auskommt, für das aus dem Verdampfer (3) kommende Wasser, welches für den Wiedersammlungbehälter (53) bestimmt ist, d. h. unter dem früher erwähnten Behälter, und im Verdichter (2) eingeschlossen ist.

9. Einrichtung in Einklang mit dem Anspruch 1, dadurch gekennzeichnet, dass der elektrische Motor (29) durch ein Spiralgetriebe (33) auf der Achse desselben, weitere Getriebe (10, 11) dreht, was dann die Drehung der nicht hervorstehenden Verzahnung (48) verursacht, welche Verzahnung drinnen in der tragenden Struktur des Viehfuttertrogs/Behälters (7) sich befindet, was für den auf den Rädern liegenden Behälter eine rotierende Bewegung verursacht, was erforderlich ist, um die Becher mit gewissen, im Voraus bestimmten Zeitspannen, und einer nach dem anderen, aus dem gekühlten und/oder gefrorenem Teil (26) in die Heizungsabteilung zu bewegen.

10. Einrichtung in Einklang mit dem Anspruch 1, dadurch gekennzeichnet, dass ein erstes Rad (60) welches drinnen im gekühlten und/oder gefrorenem Teil (26) der Verfressenöffnung, wo das Tier sein Fressen abnimmt, gegenüber, auf einem isoliertem Wand (9) der tragenden Einheit und in Berührung mit demselben, zwei Becher (22) dort gelegt werden, als die tragende Einheit dort mit dem Becher der Verfressöffnung gegenüber sich aufhält, dazu dient, dass als ein Becher in die Öffnung in der tragenden Einheit eingefügt wird, der in der tragenden Einheit ausgeübte Druck einen Gegendruck durch das obenerwähnte erste Rad (60) findet, welches auf dem obigen Teil des genannten inneren Teils installiert ist, sodass als der Druck ausgeübt ist, garnichts in Bewegung sich befindet ; und weiter dadurch gekennzeichnet, dass ein zweites Rad (12) drinnen im genannten inneren Teil (26) installiert ist, und zwar der Verfressöffnung, wo das Tier sein Fressen abnimmt, gegenüber, unter und in Berührung mit einem isolierten Teil (9) von der tragenden Einheit, und zwar zwischen zwei Bechern (22), als die tragende Einheit mit einem Becher bei der Verfressöffnung sich aufhält, und wird dazu dienen, dass als ein Becher herausgezogen wird, der auf der tragenden Einheit ausgeübter Druck durch das obenerwähnte zweites Rad (12), welches am unteren Teil des genannten inneren Teils (26) installiert ist, einen Gegendruck findet, sodass nichts bewegt wird, als der Druck ausgeübt ist.

**Revendications**

1. Dispositif pour conserver et pour distribuer, selon les temps, l'alimentation des animaux, qui comprend une unité de réfrigération dans laquelle il y a un compresseur de gaz (1), un condenseur (2), un évaporateur réfrigérateur (3), un thermostat (4) pour un réglage continu de la température, une caisse cylindrique ayant un axe central généralement vertical et ayant des couvercles supérieur et inférieur, où les parois de la caisse sont revêtues par un matériel isolant (5) et le couvercle supérieur a une ouverture d'alimentation, un élément de support installé sur roues (12-16) dans la caisse mentionnée ci-dessus et qui sont actionnées par des éléments d'actionnement qui comprennent un temporisateur (18) ; tandis que l'élément ci-dessus mentionné de support porte une certaine quantité de récipients ouverts pour contenir les aliments en formant ainsi un récipient/auge à provende, caractérisé par le fait que le récipient/auge à provende comprend une certaine quantité de subdivisions réalisées avec un matériel thermiquement isolant ; par le fait que l'appareil comprend des moyens de fermeture qu'on peut actionner entre la caisse ci-dessus mentionnée et l'élément de support susdit, où les moyens de fermeture ci-dessus mentionnés et les subdivisions thermiquement isolantes ci-dessus mentionnées peuvent être actionnées pour isoler même par garnitures les récipients ouverts l'un de l'autre et pour isoler la zone fermée et réfrigérée ci-dessus mentionnée de la susdite zone exposée qui correspond à l'ouverture de la provende et aussi à la provende à chauffer ; par le fait que les moyens d'actionnement comprennent un moteur électrique (29) pour faire tourner l'élément de support, par le fait que l'ouverture de l'alimentation est configurée comme le secteur d'un cercle et arrive jusqu'à la périphérie du couvercle d'en haut, par le fait que le couvercle d'en bas a une ouverture lui aussi, de forme semblable et dans une position correspondante à celle de l'ouverture d'alimentation, le condenseur étant placé, au moins en part, au-dessous de l'ouverture ci-dessus mentionnée, afin de pouvoir chauffer la provende et sa position est à côté de l'ouverture d'alimentation, et par le fait que l'unité de réfrigération peut fonctionner même pour l'emmagasinage de quelques quantités de provende congelée dans les récipients ouverts, et par le fait que l'appareil comprend aussi un couvercle mobile, lequel couvercle peut être déplacé en l'enlevant de l'ouverture d'alimentation ci-dessus mentionnée, selon des intervalles de temps prédéterminés après le moment où un récipient a été tourné jusqu'à la position pour l'ouverture de la provende.

2. Dispositif selon la revendication 1, caractérisé par le fait que moyennant l'élément de support avec subdivisions isolées (9) et les garnitures correspondantes le récipient/auge à provende est à même de déterminer que, à l'intérieur du dispositif, une zone réfrigérée soit créée où il y a une certaine quantité de récipients ouverts exposés et aussi une zone appropriée pour l'acclimatation et/ou le chauffage de la provende destinée à l'animal, avec dimension correspondante à un récipient, les récipients étant déplaçables et pouvant être unis au moyen de joints (43/36) avec le membre de support ci-dessus mentionné en formant comme-ça un récipient/auge à provende circulaire avec un certain nombre de récipients séparés.

3. Dispositif selon la revendication 1, caractérisé par le fait que le condenseur (2) est muni d'un récipient (53) pour recueillir l'eau qui provient de l'ambiant (26).

4. Dispositif selon la revendication 1, caractérisé par le fait que le récipient/auge à provende circulaire (7) est installé sur roues (12) à côté sur les roues (13, 14, 15, 16, 28) et se déplace lentement quand le temporisateur (18) réalise le contact avec le moteur électrique (29), qui moyennant un engrenage (33) hélicoïde sur l'arbre dudit appareil fait tourner d'autres éléments (10, 11) qui à leur tour actionnent une denture circulaire (48) à l'intérieur du récipient/auge à provende (7) en créant ainsi le mouvement rotatoire que le micro-interrupteur fait arrêter d'une telle manière que le récipient/auge à provende (7) grâce à ses parois isolées se trouve avec une subdivision de récipient (22) avec la provende établie préalablement à l'extérieur de l'ambiant (26) congelé et/ou réfrigéré même s'il reste à l'intérieur du dispositif, et comme-ça à disposition, et maintient l'étanchéité grâce aux garnitures (6) et supports correspondants (30), où le micro-interrupteur a une boule suiveuse de la boîte qui s'engage avec une dépression sur le membre de support.

5. Dispositif selon la revendication 1, caractérisé par le fait que les garnitures (6) une fois qu'elles sont en contact avec le périmètre des parois isolées (9) de la structure qui forme le récipient/auge à provende (7) avec plusieurs boîtes, réalise une isolation complète en déterminant ainsi le fait que la température froide et/ou la température glacée, restent à l'intérieur de l'ambiant (26) isolé et fermé, et à l'extérieur dudit mais à l'intérieur du dispositif, une coupe (22) avec le manger est à disposition.

6. Dispositif selon la revendication 1, caractérisé par un couvercle mobile CM qui est actionné par un ressort et par un électro-aimant, à même de permettre de porter la provende réfrigérée à une température appropriée pour permettre de la manger avant l'ouverture, en employant l'air chaud provenant de l'échange de chaleur déterminé par le condenseur (2) et, si on le préfère, aussi par une résistance électrique.

7. Dispositif selon la revendication 1, caractérisé par le fait que les coupes (22) qui forment l'ensemble récipients/auge à provende (7) on peut les extraire puisqu'elles sont seulement installées à pression et au moyen d'une cannelure, et aussi par une cannelure à joint (36) qu'on doit mettre au dessous de la partie ronde du corps central.

8. Dispositif selon la revendication 1, caractérisé par le fait que de l'intérieur du réfrigérateur arrive un petit tuyau (37) pour décharger de l'eau, et destiné à l'eau qui vient de l'évaporateur (3) et qui a comme destination le récipient (53) recollecteur, qui est installé au-dessous de l'autre ci-dessus mentionné, et reste incorporé dans le condenseur (2).

9. Dispositif selon la revendication 1, caractérisé par le fait que le moteur électrique (29) au moyen d'un engrenage hélicoïde (33) sur l'arbre dudit, fait tourner d'autres engrenages (10, 11) qui à leur tour causent la rotation de la denture (48) non pas en saillie, qui est placée à l'intérieur de la structure portante du récipient/auge à provende (7) en créant ainsi pour le récipient supporté sur les roues, un mouvement rotatif qui est nécessaire afin d'avoir les coupes qui viennent dehors aux temps intervallés préorganisés, chacune à son tour, en partant de la zone (26) congelée ou/et réfrigérée, et en arrivant à la zone appropriée pour manger.

10. Dispositif selon la revendication 1, caractérisé par le fait qu'une première roue (60) montée à l'intérieur de la partie (26) intérieure réfrigérée et/ou congelée sur le côté en opposition à l'ouverture de l'alimentation où l'animal prend sa provende, au-dessus et à contact avec une paroi (9) isolée, de l'élément de support situé deux coupes (22) quand l'élément de support s'arrête avec la coupe située/emplacée à l'ouverture pour manger, serve au fait que quand une coupe sera insérée dans une ouverture réalisée dans l'élément de support, la pression réalisée dans le membre de support sera contrebalancée par la première roue (60) ci-dessus mentionnée, qui est installée au-dessus de la partie intérieure susdite, de façon que rien ne se déplace quand la pression est réalisée, et caractérisé encore par le fait qu'une deuxième roue (12) est installée à l'intérieur de la susdite partie (26) intérieure, sur le côté en opposition à l'ouverture pour l'alimentation, où l'animal prend son manger, au-dessous et à contact avec une partie isolée (9) du membre de support placé entre deux coupes (22) quand le membre de support s'arrête avec une coupe située à l'ouverture pour l'alimentation, et ceci servira au fait que quand une coupe est extraite, la pression réalisée sur le membre de support sera contrebalancée par la ci-dessus mentionnée deuxième roue (12) montée en bas de la susdite partie (26) intérieure, ainsi que rien ne se déplace quand la pression est réalisée.

FIG.1

CM

5

24

22

6

FIG.2

22

24

2

1

FIG.3

FIG.4

FIG.5

43

5

6

6

11

10

E

2

6

MS

FIG.6

28

15

14

12

12

16

13

6

FIG.7

E    MS

R2

29

T2    R1    T1

C

12V=

220V~

0 214 355